# EUROPÄISCHE PATENTSCHRIFT

(11) **EP 2 207 663 B1**
(45) Veröffentlichungstag und Bekanntmachung des Hinweises auf die Patenterteilung: **14.12.2011**
(21) Anmeldenummer: 08840566.7
(22) Anmeldetag: 13.10.2008
(51) Int. Cl.: B29C 49/06, B29C 45/06, B29C 45/58, B29C 45/56, B29C 49/36

(54) **VORRICHTUNG ZUM STRECKBLASEN UND VERFAHREN ZUM HERSTELLEN VON PREFORMS**
DEVICE FOR STRETCH BLOW MOLDING AND METHOD FOR PRODUCING PREFORMS
DISPOSITIF DE SOUFFLAGE-ÉTIRAGE ET PROCÉDÉ DE FABRICATION DE PRÉFORMES

(30) Priorität: 17.10.2007 DE 102007049689
(43) Veröffentlichungstag der Anmeldung: 21.07.2010
(73) Patentinhaber: Krones AG, 93073 Neutraubling (DE)
(72) Erfinder: HUMELE, Heinz, 93107 Thalmassing (DE); ACHHAMMER, Karl-Heinz, 93086 Wörth/Donau (DE); HAUSLADEN, Wolfgang, 93099 Mötzing (DE); GMEINER, Franz, 93161 Sinzing Ortsteil Eilsbrunn (DE)
(74) Vertreter: Grünecker, Kinkeldey, Stockmair & Schwanhäusser
(86) Internationale Anmeldenummer: PCT/EP2008/008651
(87) Internationale Veröffentlichungsnummer: WO 2009/049848

(56) Entgegenhaltungen:
- WO-A1-2005/102642
- DE-A1- 19 737 697
- GB-A- 2 294 896
- US-A- 4 242 073

## Beschreibung

Die Erfindung betrifft eine Vorrichtung gemäß Oberbegriff des Patentanspruchs 1 und ein Verfahren gemäß Oberbegriff des Patentanspruchs 21.

Eine bekannte Vorrichtung gemäß DE 197 37 697 A zum Durchführen eines Einstufenprozesses weist einen zentralen stationären Extruder auf, der wechselweise zwei Spritzrotoren über ein 2-Wege-Steuerventil speist. Während des Spritzgießens steht der eine Spritzrotor, während der andere Spritzrotor rotierend angetrieben wird und die Preforms an einen Transferstem mit Kühleinrichtungen übergibt. In jedem Spritzrotor ist ein Drehverteiler angeordnet, der sequentiell die Spritzgießformen über gesteuerte Einspritzventile speist. Das jeweilige Einspritzventil wird erst aufgesteuert, wenn zuvor die Spritzgießform mit bis in die Endstellung eingefahrenem Innendorn verschlossen und fixiert ist.

Bei einer aus DE 31 24 523 A bekannten Vorrichtung ist ein zentraler Extruder stationär angeordnet. Sequentiell gesteuerte Nadelventile füllen die Kavitäten von jeweils vier zu einer Einheit zusammengefassten Spritzgießformen. Der Spritzrotor steht. Dem Umfang des Spritzrotors sind vier drehangetriebene Blasrotoren zugeordnet. Transfergreifer greifen an den Mündungen der Preforms an, um diese gruppenweise zu transferieren.

Bei der aus US 3 357 046 A bekannten Vorrichtung sind zwei Extruder vorgesehen, die kontinuierlich arbeiten und diametral gegenüberliegend an einem scheibenförmigen Träger montiert sind. Der Träger rotiert um seine Achse bis in eine jeweilige Abgabeposition, bleibt in der Abgabeposition stehen oder wird zumindest weitgehend verzögert, ehe ein aus dem Extruder austretender Strang abgetrennt und an eine darunter stationär angeordnete Streckblasform transferiert wird.

Bei der aus DE 195 28 695 bekannten Vorrichtung zum Durchführen des Einstufenprozesses werden zum Transferieren der durch Spritzgießen hergestellten Preforms Spreizdorne eingesetzt, die innen in der Mündung des jeweiligen Preforms angreifen. Ein stationärer zentraler Extruder speist wechselweise zwei entlang einer bogenförmigen Führung hin- und herverfahrbare Spritzgießformen.

Weiterer Stand der Technik ist zu finden in: WO 2005/102642 A, GB 2 294 896 A und US 4 242 073 A.

Der Erfindung liegt die Aufgabe zugrunde, eine Vorrichtung der eingangs genannten Art für einen effizienten Einstufenprozess mit hoher Ausstoßleistung zu optimieren. Teil der Aufgabe ist es auch, ein verbessertes Verfahren zum Herstellen der Preforms selbst anzugeben.

Mit der zu schaffenden Vorrichtung wird angestrebt, einen kontinuierlich ohne Verzögerungen oder Zwischenstopps ablaufenden, eine kleine Extruderbaugröße ermöglichenden Einstufenprozess mit optimaler Ausnutzung der Kavitätenanzahl zu ermöglichen, wobei sich die Vorrichtung durch niedrige Formkosten und eine servicefreundliche Modulbauweise auszeichnen soll. Verfahrensgemäß wird angestrebt, die Einspritzzeit und eventuelle Totzeiten zu verkürzen, durch schonende Behandlung der Schmelze eine hohe Preformqualität zu erzielen, dabei die Leistung pro Kavität zu erhöhen, und durch einen optimierten Prozessablauf Energie einzusparen.

Die gestellte Aufgabe wird durch die Merkmale des Patentanspruchs 1 und des Patentanspruchs 21 gelöst.

Vorrichtungsgemäß ergibt sich durch den zumindest mitdrehenden Extruderkopf und den Drehverteiler ein hoher, gegebenenfalls durch eine Schmelzepumpe verstärkter, realisierbarer Einspritzdruck bei verkürzter Prozesszeit, wobei eine kleine Extruderbaugröße ausreicht und die gegebenenfalls hohe Kavitätenanzahl der Spritzgießformen optimal nutzbar ist. Diese Vorteile sind gepaart mit niedrigen Formkosten, da die Nadelventile bereits zum Maschinenmodul gehören können, und mit hoher Servicefreundlichkeit aufgrund einer Modulbauweise der Vorrichtung.

Verfahrensgemäß lässt sich eine Verkürzung der Einspritzzeit und der Totzeiten erzielen, da die Spritzgießform beim Verfahrensbeginn noch nicht komplett geschlossen zu sein braucht, d.h, die Mundstücksform kann noch offen oder abgehoben sein. Die zunächst unter niedrigem Druck einströmende Schmelze wird nicht sofort vom kalten Innendorn abgekühlt, sondern kann sich zumindest im

Bodenbereich der späteren Preform gleichmäßig ausbreiten. Eine Dosiereinheit wird nicht benötigt und Probleme bei der Portioniergenauigkeit sind eliminiert, wie auch spezifische Nachdruckprobleme. Es reichen geringe Presskräfte für die Verstellung des Innendorns aus, da während der Kompressions-Molding-Phase noch keine endgültige Ausformung des Preforms stattfindet. Dadurch wird die Schmelze schonend behandelt und ergibt sich im Preform hohe Qualität. Die Leistung pro Kavität lässt sich erhöhen. Durch den optimierten Prozessablauf wird Energie eingespart. Die gegebenenfalls überlagerte Nachdrückphase vermeidet Schwund-Probleme.

Bei einer zweckmäßigen Ausführungsform ist der gesamte Extruder zusammen mit dem Spritzrotor drehantreibbar. Der Extruder kann von oben oder von unten, vorzugsweise trennbar, an den Spritzrotor angesetzt sein.

Bei einer zweckmäßigen Ausführungsform weist der, zweckmäßig oben vertikal angeordnete, Extruder einen das Extrudermundstück umfassenden, drehantreibbaren Druckabschnitt und einen stationären Beschickungsabschnitt auf. Der Beschickungsabschnitt wird vorzugsweise über eine Drehmomentstütze relativ zum Spritzrotor festgelegt und ermöglicht die bequeme Granulatzufuhr, beispielsweise über eine oder mehrere stationär angeordnete Zuführvorrichtungen. Zwischen dem Druckabschnitt und dem Beschickungsabschnitt ist eine abgedichtete Drehverbindung vorgesehen, so dass das Extrudermundstück mit dem Druckabschnitt rotiert, während der Beschickungsabschnitt steht. Da die vom Extruder eingespeiste Schmelze auf kürzestem Weg zu den Spritzgießformen gebracht wird, dabei keine Engstellen oder nennenswerten Umlenkbereiche existieren, reichte eine relativ kleine Extrudergröße aus, weil der Prozess nicht wie im Stand der Technik taktweise, sondern kontinuierlich abläuft.

Zweckmäßig weist der Drehverteiler, der mit dem Extrudermundstück und dem Spritzrotor rotiert, eine mit dem Extruderkopf, vorzugsweise entkoppelbar, verbundene Vielkanalscheibe auf, die über, vorzugsweise beheizte, Verrohrungen oder Heißkanäle mit in Formträgem des Spritzrotors montierten, gesteuerten Nadelventilen verbunden sind. Es liegen so nur gleich lange Übertragungswege vor und ist ein permanenter kontinuierlicher Schmelzefluss sichergestellt.

Da im Spritzrotor verschiedene Medien, z.B. ein Kühlmedium, Druckluft, Hydraulikmedium, elektrischer Steuer- und Versorgungsstrom, ein Reinigungsmedium, und dgl. benötigt werden, und die Zufuhr auch während des Betriebs des Spritzrotors gewährleistet sein muss, ist zweckmäßig an der dem Extruderkopf abgewandten Seite des Drehverteilers ein weiterer Drehverteiler für diese Arbeitsmedien angeordnet.

Ein besonders wichtiges Merkmal der Erfindung besteht darin, dass jede Spritzgießform eine Boden- und Rumpfform, eine öffenbare, vorzugsweise gekühlte, Mundstücksform und einen axial durch die Mundstücksform verstellbaren, bewegten und vorzugsweise innen gekühlten Innendorn aufweist. Dadurch ist eine exakt steuerbare Temperaturverteilung im Preform möglich.

Bei einer bevorzugten Ausführungsform besitzt jede Spritzgießform eine Boden- und Rumpfform und eine zusammen mit einem innen gekühlten und innen hohlen Innendorn relativ zur Boden- und Rumpfform verfahrbare Mundstücksform, die öffenbar ist. Das Schmelze-Einspritzventil ist ein Dosier-Nadelventil, das an den Innendorn anschließbar ist, um die Kavität durch den hohlen Innendorn zu speisen. Das Dosier-Nadelventil speist eine exakt vorherbestimmte Dosis der Schmelze ein, wobei die Dosis so bemessen ist, dass ein Schwund im Preform vermieden wird. Da die Schmelze durch den hohlen Innendorn eingespeist wird, kann die Boden- und Rumpfform einfacher ausgebildet sein. Der hohle Innendorn ist, wie auch die Boden-und Rumpfform innen gekühlt, um die Temperaturverteilung im Preform zu optimieren.

Bei dieser Ausführungsform weist der Innendorn einen durchgehenden und im Bereich des freien Domendes mündenden Innenkanal auf, in den über das Dosier-Nadelventil die Schmelzedosis in die Kavität einbringbar ist. Im Innenkanal ist eine Nadel angeordnet, die zwischen einer zurückgezogenen Speiseposition über einen Schmelze-Nachdrückhub bis in eine die Mündung des Innenkanals verschließende Schließposition verfahrbar ist. Die gesamte Schmelzedosis wird durch das gesteuerte Dosier-Nadelventil in die Kavität eingebracht, und zwar in drei aufeinanderfolgenden oder aneinander anschließenden Schritten. Zunächst wird ein erster Teil der Dosis bei aus der Kavität herausgehobenem Innendorn durch den Innenkanal des Innendorns mit geringem Druck in die Kavität eingeleitet, bis dort ein Füllstand unterhalb der Stelle der Mündungsform erzielt ist. Dann wird der Innendorn zusammen mit der Mündungsform abgesenkt, wobei die anfängliche Schmelzefüllung unter geringem Druck durch das Eintauchen des Innendorns in Richtung zur Stelle der Mündungsform verdrängt wird. Sobald die Mündungsform mit der Boden- und Rumpfform verblockt ist, und der Innendorn seine untere Endstellung erreicht hat und fixiert wurde, d.h., die Kavität dicht verschlossen ist, wird der zweite Teil der Schmelzedosis vom Dosier-Nadelventil her durch den Innenkanal eingespritzt, bis auch der Bereich der Mündungsform ausgefüllt ist. In dieser Phase verbleibt ein restliches Schmelzevolumen im Innenkanal. Dieses restliche Schmelzevolumen wird schließlich durch Einschieben der Nadel durch den Innenkanal des Innendorns in einer Nachdrückphase in die Kavität eingepresst, um einem Schwund vorzubeugen. Die Nadel wird so weit eingepresst, bis sie schließlich die Mündung des Innenkanals des Innendorns verschließt.

Zweckmäßig weist die Nadel am freien Ende einen Nachdrück-Stempel mit dem Durchmesser der Mündung des Innenkanals auf. Dieser Stempel presst das restliche Schmelzevolumen aus dem Innenkanal in die Kavität und verschließt schließlich die Mündung. Nach der Fertigstellung des Preforms wird die Mündungsform zusammen mit dem Innendorn aus der Kavität herausgehoben, wobei der Preform am Innendorn verbleibt. Danach wird die Mündungsform geöffnet und wird der Preform vom Innendorn abgenommen und in die Konditionierungsstrecke transferiert. In dieser Phase wird auch die Nadel mit dem Stempel wieder so weit zurückgezogen, dass der Innenkanal des Innendorns zum Einspeisen der nächsten Schmelzedosis wieder frei ist. Dabei verschließt der Stempel den Innenkanal nach oben.

Zweckmäßig sind den Spritzgießformen in der Konditionierstrecke transportierbare, vorzugsweise in der Konditionierstrecke rotierbare, Transfer-Spreizdorne zugeordnet, die zur Entnahme der Preforms jeweils aus der geöffneten Mundstücksform betätigbar sind. Jeder Preform wird innen im Mundstück ergriffen und in der Konditionierstrecke präzise konditioniert, um für das Streckblasen das richtige Temperaturprofil aufzuweisen, speziell in den Bereichen, in denen beim Strecken und Blase die stärksten Verformungen auftreten, während das Mundstück bereits mit der endgültigen Gestalt in der Spritzgießform und entlang der Konditionierstrecke kühl bleibt.

Um den Transfer der Preforms auf kürzestem Weg und angepasst an die Drehgeschwindigkeit des Blasrotors zu vereinfachen, wird zwischen dem Blasrotor und der Konditionierstrecke ein Einlaufstern mit Übergabeelementen für von den Transfer-Spreizdornen abgenommene Preforms vorgesehen.

Bei einer anderen, besonders wichtigen Ausführungsform weist jede Spritzgießform jeweils öffenbare Boden- und Rumpfformen und eine, vorzugsweise gekühlten, Mundstücksform sowie einen durch die Mundstücksform verfahrbaren und aus der Spritzgießform entnehmbaren Innendorn auf. Der Innendorn dient während des gesamten Spritzprozesses und in der Konditionierstrecke als Träger für den Preform, und ist beispielsweise nicht gekühlt. Allerdings lässt sich jeder Innendorn auf dem Rückweg in den Spritzrotor entlang der Konditionierstrecke so weit abkühlen, dass er beim Spritzprozess keinen unerwünschten Temperatureinfluss auf den entstehenden Preform ausübt.

Zweckmäßig ist der entnehmbare Innendorn mit einem Adapterteil versehen, an welchem an einer Gliederkette der Konditionierstrecke angeordnete Transfergreifer angreifen, um den Innendorn mit dem Preform zu entnehmen oder übernehmen und entlang der Konditionierstrecke zu transportieren.

Da die Preforms relativ fest an den Innendornen sitzen, ist bei einer zweckmäßigen Ausführungsform in oder entlang der Konditionstrecke eine Preform-Abnahme- und - Übergabevor-richtung vorgesehen, beispielsweise eine kurvengesteuerte Absenkvorrichtung, mit der die Preforms von den Innendornen abnehmbar und an einen mit einem Einlaufstern des Blasrotors zusammenwirkenden Übergabestern transferierbar sind.

Bei einer weiteren, alternativen und wichtigen Ausführungsform ist in jeder Spritzgießform eine öffenbare und entnehmbare Mundstücksform enthalten. Der in der Spritzgießform verbleibende Innendorn ist zweckmäßig innen gekühlt. Die Mundstücksform wird zusammen mit dem fertigen Preform mittels Transferelementen entnommen und zumindest entlang der Konditionierstrecke transportiert, vorzugsweise sogar bis in Blasformen des Blasrotors, so dass in diesem Fall jede Mundstücksform als am Preform bleibendes und in der Blasform nochmals verwendetes Transferelement dient.

Im Hinblick auf schnelle und präzise Öffnungs- und Schließbewegungen der Mundstücksform ist in einer zweckmäßigen Ausführungsform der Mundstücksform ein Pneumatikzylinder mit einem Kniehebelmechanismus zugeordnet. Die Schließkraft der Mundstücksform wird allerdings durch Verblocken mit der Rumpfform und/oder dem Innendorn bewirkt.

Hierbei wird zweckmäßig der Innendorn durch einen Hydraulikzylinder verstellt, der eine hohe Schließkraft aufbringt, z.B. einen Hydraulikzylinder mit einer Leistungsfähigkeit von etwa 8 Tonnen.

Für die Schmelzeförderung und eine ausgleichende Wirkung des Schmelzefluss kann zweckmäßig im Extruder im Bereich der Drehverbindung eine Pufferungszone ausgebildet sein.

Bei einer alternativen Ausführungsform ist die Konditionierstrecke sogar längenvariabel. Dies kann entweder durch eine Verstellung oder durch Austausch der Gliederkette und Versetzung eines Umlenkmechanismus erfolgen.

Im Hinblick auf kompakte Abmessungen der Vorrichtung kann die Konditionierstrecke ein rotorförmiger Konditionierkreis sein, der umfangsseitig eine Gliederkette mit Transfer-Spreizdornen trägt. Alternativ kann die Konditionierstrecke jedoch als langgestreckte Konditionierschleife mit einer umfangsseitigen Gliederkette und z.B. daran angeordneter Innendorn-Transfergreifern ausgebildet sein.

Zum thermischen Konditionieren der Preforms ist zweckmäßig der als Konditionierkreis ausgebildeten Konditionierstrecke zwischen dem Spritzrotor und dem Einlaufstern wenigstens eine Preform-Kühlstation zugeordnet.

Bei einer anderen Ausführungsform ist an der als Konditionierschleife ausgebildeten Konditionierstrecke im Rücklauftrum zwischen dem Übergabestern und dem Spritzrotor wenigstens eine Kühlstation vorgesehen, mit der die Innendome auf dem Rückweg heruntergekühlt werden.

Schließlich ist es zweckmäßig, um Probleme aus einem Teilungsverzug bewältigen zu können, insbesondere die als Konditionierkreis ausgebildete Konditionierstrecke als Teilungsverzugsstrecke auszubilden, in der der Preform rotiert.

Verfahrensgemäß wird bei der Herstellung qualitativ hochwertiger Preforms so vorgegangen, dass zunächst nur ein Teil der Kavität in Abwesenheit des Innendorns unter geringem Druck mit Schmelze aus dem Nadelventil gefüllt wird, und zwar bis zu einem Füllstand unterhalb der Mündungsform. Danach wird diese Schmelzefüllung durch Verstellen des Innendorns in Richtung zur Endstellung unter geringem Druck in Richtung zur Mündungsform verdrängt. Erst dann wird der Innendorn in der Endstellung fixiert, ehe restliches Schmelzevolumen unter erhöhtem Druck eingespritzt wird.

Dies erfolgt beispielsweise indem das Nadelventil bei noch nicht in die Kavität und die Endposition verstelltem Innendorn geöffnet und Schmelze dosiert unter geringem Druck in die Boden- und die Rumpfform eingebracht. In Abwesenheit des kühlen Innendorns kann sich die Schmelze günstig verteilen, ehe dann der Innendorn unter Verdrängen von Schmelze in Richtung zur Mundstücksform in die Endlage verstellt und mit der erforderlichen Schließkraft mit der Mundstücksform verblockt wird. Dann ist die Kavität verschlossen und wird restliches Schmelzevolumen dosiert unter hohem Druck aus dem Nadelventil eingespritzt, bis der Preform fertiggestellt ist.

Bei einer zweckmäßigen Verfahrensvariante wird dem Spritzgießen des Preforms eine Nachdrückphase überlagert, um einen Schwund vorzubeugen. Die Kavität wird zunächst bei noch herausgezogenem Innendorn und abgehobener Mündungsform durch den Innendorn mit geringem Druck teilgefüllt. Dann wird der Innendorn mit der Mündungsform abgesenkt und findet die Verblockung statt, wobei die anfängliche Schmelzefüllung unter geringem Druck vom eintauchenden Innendorn verdrängt wird. Nach der Verblockung wird der Rest der Schmelzedosis, ausgenommen das restliche Schmelzevolumen im Innenkanal des Innendorns, in die Kavität gebracht. Nachdem dann das Dosier-Nadelventil geschlossen worden ist, wird eine Nadel durch den Innenkanal geschoben, um in der Nachdrückphase das restliche Schmelzevolumen in die Kavität zu pressen und so einem Schwund vorzubeugen.

Verfahrensgemäß kann ferner sogar die Mundstücksform erst geschlossen oder auf die Rumpfform aufgesetzt und/oder der Innendorn erst eingefahren werden, nachdem in den einen Teil der Kavität ohne Kontakt mit dem Innendorn genügend Schmelze eingebracht worden ist. Dies spart Prozesszeit ein und ermöglicht anfangs niedrigen Druck.

Ausführungsformen des Erfindungsgegenstandes werden anhand der Zeichnungen erläutert. Es zeigen:
- Fig. 1: eine Schemadraufsicht einer ersten Ausführungsform einer Vorrichtung zum Streckblasen von Kunststoffbehältern in einem Einstufenprozess,
- Fig. 2: eine Seitenansicht, teilweise im Schnitt eines Spritzrotors der Ausführungsform von Fig. 1,
- Fig. 3: eine Detailperspektivansicht einer Spritzgießform im Spritzrotor von Fig. 1.
- Fig. 4A bis 4F: Seitenansichten zu einzelnen Schritten in der Bewegungsabfolge der Ausführungsform der Spritzgießform von Fig. 1,
- Fig. 5A bis 5C: Schnittdarstellungen einer Spritzgießform in drei aufeinanderfolgenden Prozessschritten,
- Fig. 6: eine Seitenansicht, teilweise im Schnitt einer Ausführung einer Spritzgießform 10 in geschlossenem Zustand, wobei gegenüber der Darstellung in Fig. 4A mehr Details hervorgehoben werden,
- Fig. 7: die Spritzgießform von Fig. 6 in zerlegtem Zustand,
- Fig. 8: eine Schemadraufsicht auf eine weitere Ausführungsform der Vorrichtung,
- Fig. 9: eine Detailperspektivansicht zum Spritzrotor der Ausführungsform von Fig. 6, und
- Fig. 10A bis 10D: eine weitere Ausführung einer Spritzgießform in vier Prozess-Schritten.

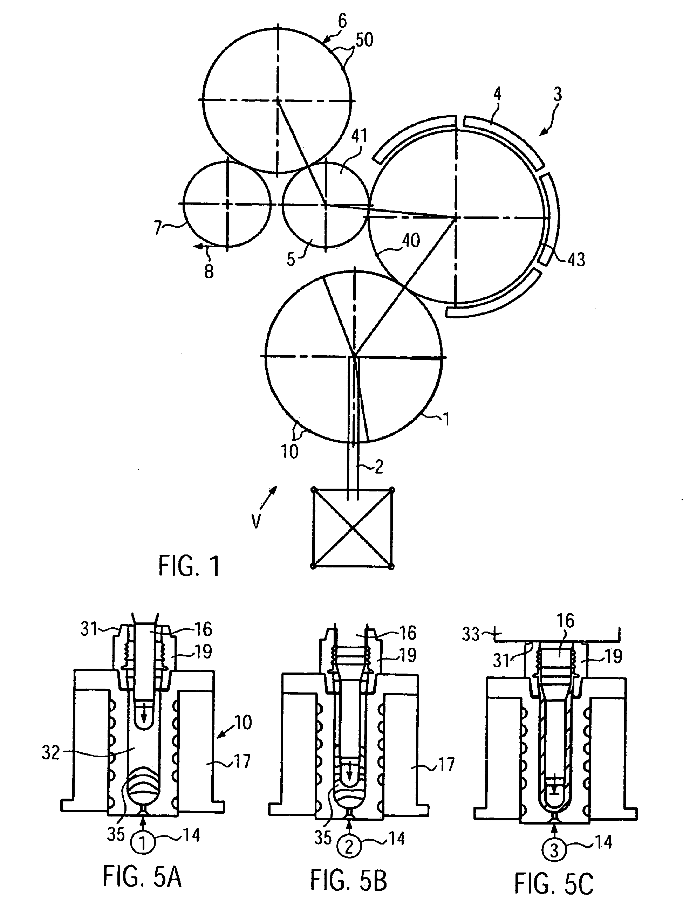

In Fig. 1 ist eine Vorrichtung V zum Streckblasen von Kunststoffbehältern, insbesondere PET-Flaschen, in einem Einstufenprozess in Draufsicht gezeigt. Die einzelnen Komponenten der Vorrichtung V sind in Modulbauweise kompakt zueinander angeordnet, und umfassen einen Spritzrotor 1, der mit einem zumindest teilweise mitdrehenden Extruder 2 kombiniert ist und mit einer angrenzenden, hier als Konditionierkreis ausgebildeten Konditionierstrecke 3 zusammenwirkt, deren mehrere Kühl und/oder Heizstationen 4 zugeordnet sind. Die Konditionierstrecke 3 kooperiert mit einem Zuführstern 5, der seinerseits mit einem Blasrotor 6 zum Streckblasen der Behälter zusammenarbeitet, von dem fertiggestellte Behälter über einen Abführstern 7 in Pfeilrichtung 8 abtransportiert werden. Am Spritzrotor 1 sind z.B. im Umfangsbereich viele Spritzgießformen 10 angeordnet. In der Konditionierstrecke 3 sind Transfer-Spreizdorne 40 als Transferelemente an beweglichen Armen eines Teilungsverzugssterns 43 vorgesehen. Der Einlaufstern 5 weist ebenfalls Transport-oder Transferelemente auf, die vom Spritzrotor 1 kommende Preforms P zu Blasformen 50 des Blasrotors 6 transferieren.

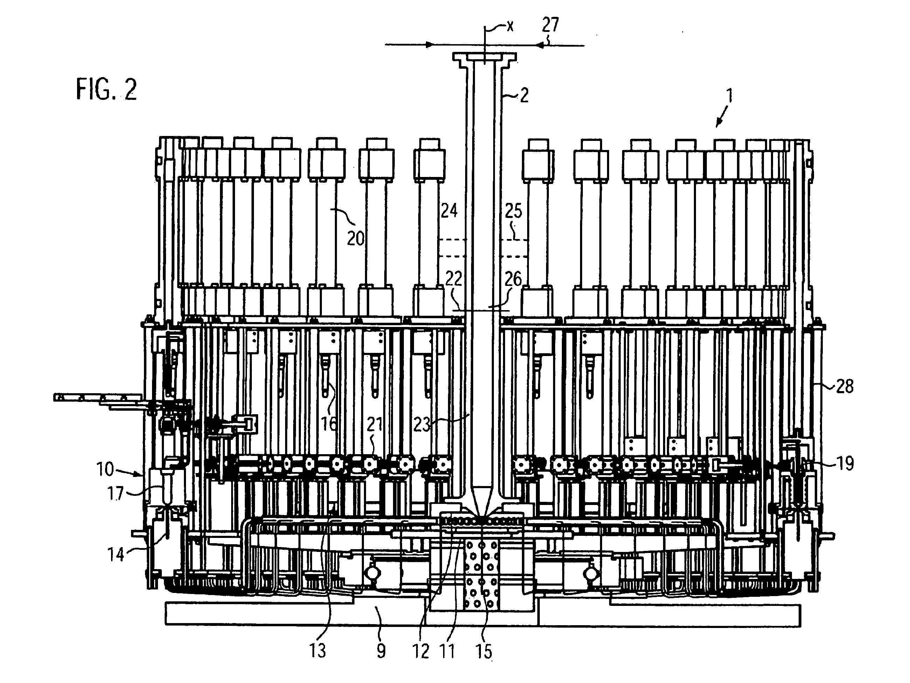

Gemäß Fig. 2 ist der Spritzrotor 1 auf einem unterseitigen Träger 9 drehantreibbar angeordnet und mit den in Zuganker 28 aufweisenden Trägern angeordneten Spritzgießformen 10 bestückt. Im Zentrum des Spritzrotors 1 ist ein Drehverteiler 11 angeordnet, der eine Vielkanalscheibe 12 und zu gesteuerten Nadelventilen 14 bei den Spritzgießformen 10 verlaufende Verrohrungen 13 (Heißkanäle mit Beheizung) umfasst. Ferner ist bei der gezeigten Ausführungsform unten zentral ein Medien-Drehverteiler 15 für Arbeitsmedien des Spritzrotors 1 angeordnet (Kühlmedium, Reinigungsmedium, Heizmedium, Druckluft, Hydraulikmedium, Steuer- oder Versorgungsstrom, und dgl.).

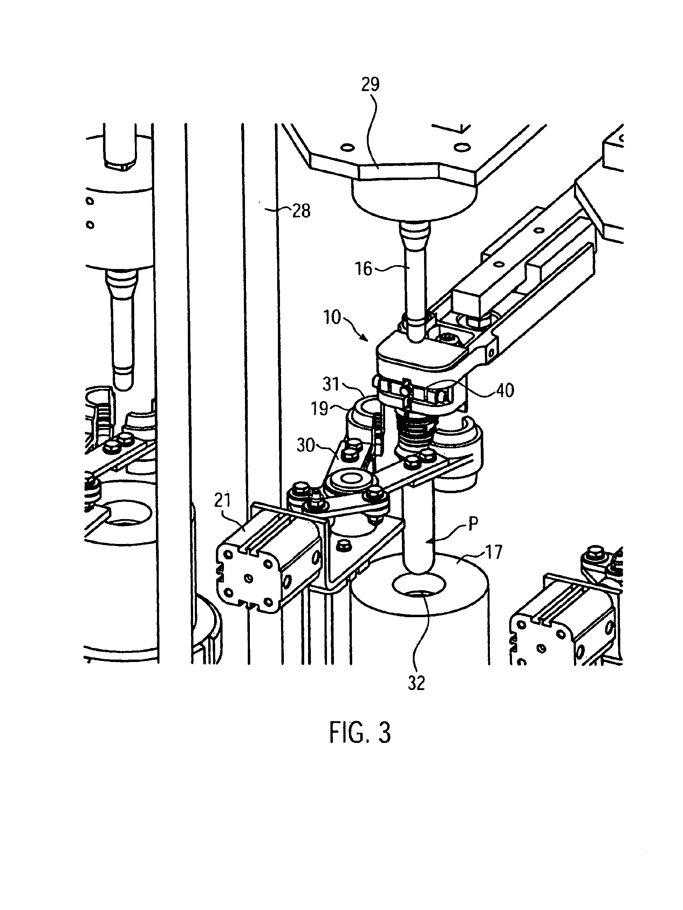

Jede Spritzgießform 10 enthält einen mittels eines Hydraulikzylinders bzw. einer servo-betriebenen Verschließspindel (im Folgenden als Servo bezeichnet) 20 linear verstellbaren Innendorn 16, eine einstückige oder geteilte Boden- und Rumpfform 17 und eine geteilte bzw. öffenbare Mundstückform 19. Jede Mundstückform 19 wird mittels eines Pneumatikzylinders 21 und einem in Fig. 3 gezeigten Kniehebelmechanismus 30 geöffnet bzw. geschlossen und mittels des Hydraulikzylinders bzw. Servo 20 über den Innendorn 16 in der Schließstellung mittels Konusformschluss verblockt. Zweckmäßig ist der Innendorn 16 innen gekühlt, und ist auch die Mündungsform 19 gekühlt.

Der zentrale Extruder 2 ist im Wesentlichen in der Achse X des Spritzrotors 1 und oben (alternativ unten), wobei zumindest das Extrudermundstück mit dem Spritzrotor 1 synchron rotiert. Zweckmäßig ist das Extrudergehäuse in einen Hochdruckteil 23 mit dem Extrudermundstück und einen Beschickungsteil 24 unterteilt. Der Hochdruckteil 23 steht mit dem Beschickungsteil 24 über eine abgedichtete Drehverbindung 22 in Zusammenwirkung, derart, dass der Beschickungsteil 24 stationär steht, wenn der Hochdruckteil 23 rotiert, beispielsweise über eine Drehmomentstütze 25 relativ zum Spritzrotor 1 gehalten ist. Im Inneren des Gehäuses des Extruders 2 befindet sich zumindest eine nicht näher hervorgehobene Extruderschnecke 26, die mit einer Relativbewegung zum Hochdruckteil (23) rotiert. Der Extruder wird z.B. über mindestens eine stationär angeordnete Granulatzuführschnecke 27 mit KunststoffGranulat versorgt.

Fig. 3 verdeutlicht die geöffnete Spritzgießform 10, zu der durch die Säulen 28 und eine Tragplatte 29 eines Formhalters von vier Seiten Zugang möglich ist. Der Pneumatikzylinder 21 hat über den Kniehebelmechanismus 30 die Mündungsform 19 bereits geöffnet. An der Oberseite der Mündungsform 19 ist ein Schließkonus 31 erkennbar, der mit einem Gegenkonus in einem Träger des Innendorns 16 zusammenwirkt, um in der Schließstellung der Mündungsform 19 den erforderlichen Schließdruck aufzubauen. Der fertige Preform P ist aus einer Kavität 32 der Rumpfund Bodenform 17 durch eine Höhenverstellbewegung der Mündungsform 19 herausgezogen und bereits an einen nicht näher hervorgehobenen Transfer-Spreizdorn 40 (oder einen seitlich heranbewegten Greifer) gekoppelt, der den Preform P in die Konditionierstrecke 3 bringt. In dieser Ausführungsform braucht die Rumpfund Bodenform 17 nicht teilbar oder öffenbar zu sein.

Der Transfer-Spreizdorn 40 greift innen in die Mündung des Preforms P ein, die in dieser Betriebsphase stabil ist und eine niedrige Temperatur hat. Der Transfer-Spreizdorn 40 wird dann mit dem Preform an einem Teilungsverzugsstem 43 in die Konditionierstrecke 3 übertragen, wobei der Transfer-Spreizdorn 40 rotiert und den Preform an den Kühlstationen 4 vorbeifördert, bis das richtige Temperaturprofil erzielt ist. Dann übernehmen Greifer 41 am Einlaufstern 5 den jeweiligen Preform und übertragen diesen an eine Blasform 50 des Blasrotors 6. Bei der weiteren Rotation des Blasrotors 6 erfolgt der übliche Streckblasprozess.

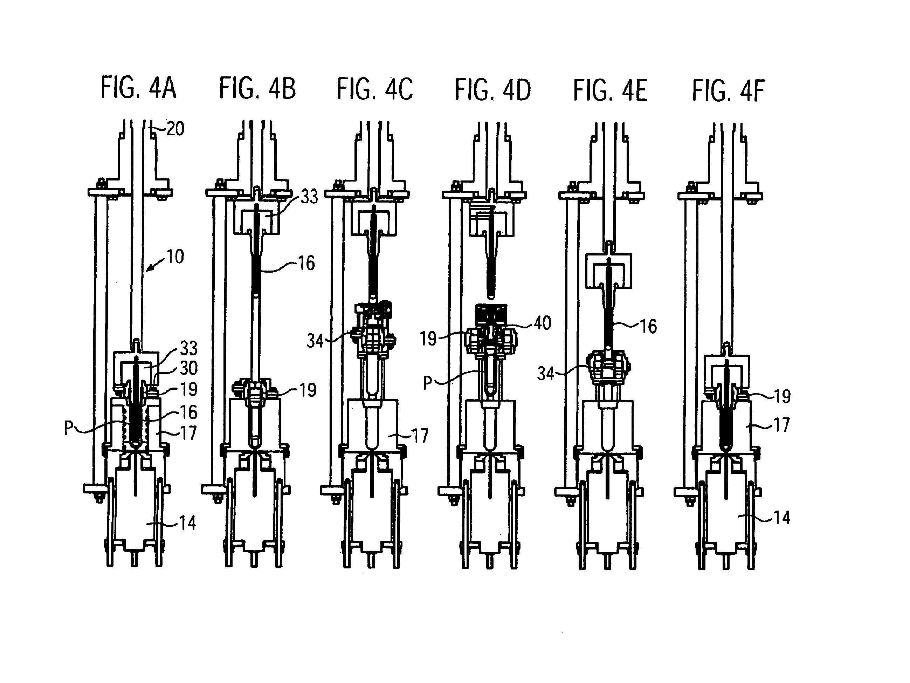

In den Fig. 4A bis 4F wird eine mögliche Bewegungsabfolge in der Spritzgießform 10 gezeigt.

In Fig. 4A ist die Spritzgießform nach Abschluss eines Spritzvorganges noch geschlossen. Das Nadelventil 14 sperrt ab. Ein Träger 33 des Innendorns 16 verblockt die geschlossene Mündungsform 19. Der Kniehebelmechanismus 30 ist geschlossen.

In Fig. 4B ist der Innendorn 16 mit seinem Träger 33 nach oben gefahren. Nun wird die Mündungsform 19 zusammen mit dem Kniehebelmechanismus 13 und dem Pneumatikzylinder 21 in die Position in Fig. 4C zusammen mit dem Preform nach oben gefahren. Dadurch wird die Verblockung zwischen der Mündungsform 19 und der Rumpf- und Bodenform 17 gelöst. Es wird nun der Transfer-Spreizdorn herangefahren und die Preform mit dem Mundstücksform-Mechanismus 34 in den Transfer-Spreizdorn 40 der Konditionierstrecke 3 gefahren.

In Fig. 4D ist die Mündungsform 19 geöffnet worden und sitzt der Preform P bereits am Transfer-Spreizdorn 40, der ihn aus dem Spritzkarussell ausschwenkt.

In Fig. 4E ist der Mundstücksform-Mechanismus 34 wieder eingefahren und abgesenkt und ist die Mundstücksform 19 geschlossen. Der Innendorn 16 wird abgesenkt.

In Fig. 4F ist der Innendorn 16 in seiner unteren Endstellung angelangt und mit der Mündungsform 19 verblockt, die ihrerseits auch mit der Rumpf- und Bodenform 17 verblockt ist. Das Nadelventil 14 öffnet und ein neuer Spritzvorgang beginnt.

Die Bewegungsabfolge in den Fig. 4A bis 4F kann zweckmäßig etwas abgewandelt werden, um ein Verfahren gemäß den Fig. 5A bis 5C durchzuführen, bei dem ein Spritzgießvorgang mit einem Kompressions-Molding-Vorgang kombiniert oder überlagert wird. Dies bedeutet, dass gemäß Fig. 5A im Unterschied zu den Fig. 4E und 4F der Innendorn 16 noch nicht nach unten bis in die Endstellung gefahren ist und gegebenenfalls sogar auch die Mündungsform 19 noch nicht aufgesetzt und geschlossen ist, wenn mit dem Öffnen des Nadelventils 14, das gegebenenfalls weg/zeitgesteuert ist, Schmelze 35 unter geringem Druck dosiert zunächst in die Kavität 32 der Boden- und Rumpfform 17 einfließt. Im Unterschied von der Darstellung in Fig. 4F wird nun erst bei weiterhin geöffnetem Nadelventil in Fig. 5B der Innendorn 16 in Richtung zur Endstellung in die Schmelze 35 eingetaucht, wobei er Schmelze 35 in Richtung zur Mundstücksform 19 verdrängt. Die Mundstücksform 19 ist gegebenenfalls erst jetzt oder noch nicht mit der Rumpf- und Bodenform 17 verblockt und geschlossen worden. In der Folge gemäß Fig. 5C wird der Innendorn 16 bis in die Endstellung verfahren und mittels des Trägers 33 mit dem Konus 31 der gegebenenfalls zwischenzeitlich abgesenkten, geschlossenen Mündungsform 19 verblockt, so dass die Kavität 32 verschlossen ist. Die erforderliche Schließkraft wird über den Servo 20 erzeugt. Restliches Schmelzevolumen wird dann nach einem herkömmlichen Spritzgießprozess unter hohem Druck eingespritzt.

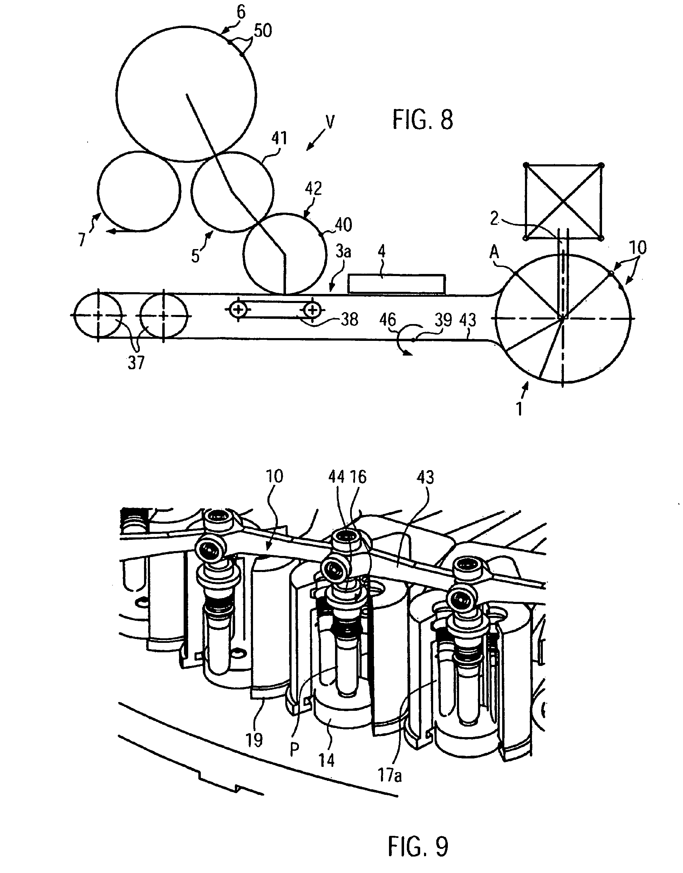

Die Vorteile des anhand der Fig. 5A bis 5C geschilderten Verfahrens sind wie folgt:
Die unter geringem Druck einströmende Schmelze 35 wird nicht sofort vom kalten Innendorn 16 abgekühlt, da dieser noch angehoben ist. Es findet eine gleichmäßige Ausbreitung der Schmelze statt, wobei sich eine Verkürzung der Einspritzzeit erzielen lässt. Ferner ergibt sich bei diesem Verfahren eine Verkürzung der Totzeit, da die Spritzgießform beim Prozessbeginn noch nicht komplett geschlossen zu sein braucht. Eine Dosiereinheit ist nicht erforderlich, und es treten auch keine Probleme hinsichtlich der Portioniergenauigkeit beim Kompressions-Molding auf. Ebenso entfällt eine für das Kompressions-Molding spezifische Nachdruckproblematik. Da während der Kompressions-Molding-Phase keine endgültige Ausformung stattfindet, sind nur geringe Presskräfte für den Innendorn 16 erforderlich. Insgesamt wird die Schmelze sehr schonend behandelt, was in hoher Qualität des Preforms resultiert. Insgesamt ergibt sich eine Erhöhung der Leistung pro Spritzgießform bzw. Kavität und lässt sich durch den optimierten Prozess Energie einsparen. Dieses Verfahren ist zweckmäßig für die Vorrichtung V gemäß Fig. 1 (oder gemäß Fig. 8), ist aber auch für andere Streckblasvorrichtungen oder Preform-Spritzgießvorrichtungen zweckmäßig.

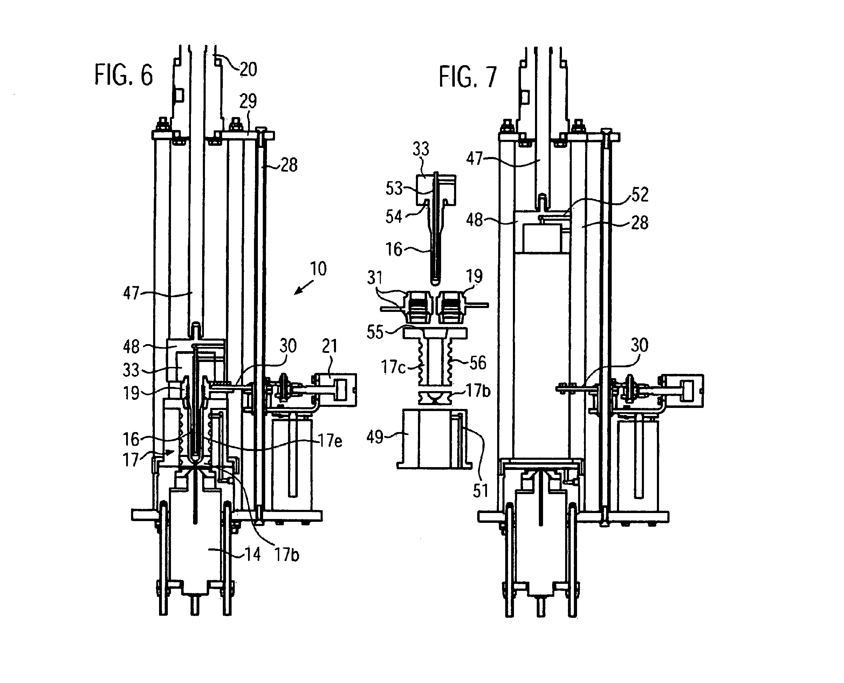

In Fig. 6 ist die Spritzgießform 10 mit einer Boden- und Rumpfform 17 aus einer separaten Bodenform 17b und einer separaten Rumpfform 17c ausgebildet, und sitzt der Träger 33 des Innendorns 16 in einem Träger 48, der mit einer Kolbenstange 47 des Hydraulikzylinders oder alternativ mit dem Servo 20 verbunden ist. In Fig. 6 ist die Spritzgießform 10 geschlossen.

In Fig. 7 ist die Spritzgießform 10 in zerlegtem Zustand dargestellt. Der Innendorn 16 ist mit seinem Träger 33 aus dem Träger 48 herausgezogen. Der Innendorn weist Kühlkanäle 53 auf, die mit Kühlkanälen 52 im Träger 48 kommunizieren, sobald der Träger 33 eingesetzt ist. Ferner ist unten im Träger 33 ein Verriegelungskonus 54 zur Zusammenarbeit mit dem Verriegelungskonus 31 der Mündungsform 19 geformt, und ist auch in der Rumpfform 17c ein Verriegelungskonus 55 ausgebildet. Die Bodenform 17b und die Rumpfform 17c werden nacheinander in eine Hülse 49 eingeführt, die angrenzend an das Nadelventil 14 im Formhalter 28, 29 montiert ist und Kanäle 51 zum Kühlen und/oder Beheizen enthält, welche mit in der Rumpfform 17c und der Bodenform 17b geformten Kanälen 56 kommunizieren. Der Kniehebelmechanismus 30 ist in Fig. 7 von der Mündungsform 19 gelöst.

In der in Fig. 8 in einer Schemadraufsicht gezeigten weiteren Ausführungsform der Vorrichtung zum Streckblasen von Kunststoffbehältern, insbesondere PET-Flaschen, in einem Einstufenprozess, dient der jeweilige Innendorn 16 während des Spritzprozesses und entlang der Konditionierstrecke als Träger für den Preform P. In diesem Fall ist der Innendorn 16 nicht innen gekühlt.

An den Spritzrotor 1 mit dem mitdrehenden Extruder 2 schließt sich in Fig. 8 eine Konditionierstrecke 3a an, die als Konditionierschleife mit der Gliederkette 43 ausgebildet ist, welche sich auch um den Spritzrotor 1 erstreckt. Die Konditionierstrecke 3a kann, wie bei 37 angedeutet, längenvariabel sein. An der Gliederkette 43 sind Greifer 39 angeordnet, die beispielsweise in Richtung eines Pfeiles 46 entlang der Konditionierstrecke 3a rotierbar sind, und dazu dienen, in Fig. 9 gezeigte Adapterteilen 44 der Innendorne 16 zu ergreifen.

In Fig. 8 ist zwischen der Konditionierstrecke 3a und dem Einlaufstern 5 ein Übergabestern 42 angeordnet, der beispielsweise mit Greifern 40 (z.B. Spreizdornen) bestückt ist. Die Greifer 40 übernehmen die Preforms P von einer Abnahme- und Übergabevorrichtung 38 in der Konditionierstrecke 3a. Die Abnahme- und Übergabevorrichtung 38 ist beispielsweise eine Absenkvorrichtung für die von den Innendornen 16 her transportierten Preforms. Eine Kühlstation 4 zwischen dem Übergabestern 42 und dem Spritzrotor 1 kann zum Kühlen der Innendome 16 auf dem Rückweg in den Spritzrotor 1 verwendet werden. Weitere, nicht gezeigte Heizund/oder Kühlstationen können zum Konditionieren der Preforms an den Innendornen 16 benutzt werden. Gegebenenfalls sind dem Übergabestern 42 Preform-Kühlstationen zugeordnet. Auch die in Fig. 8 gezeigte Vorrichtung V ist in Modulbauweise aus einzelnen wahlweise miteinander kombinierbaren Modulen in kompakter Anordnung zusammengesetzt.

Fig. 9 verdeutlicht, dass in jeder Spritzgießform 10 die Boden- und Rumpfform 17a teilbar und öffenbar ist, und auch schon die Mündungsform 19 in öffenbarer Version enthält. Der Innendorn 16 trägt oben den Adapterteil 44, an welchem der Greifer 39 an der Gliederkette 34 angreift, um den den Preform P tragenden Innendorn 16 aus der geöffneten Spritzgießform 10 zu entnehmen und in die Konditionierstrecke 3a zu überführen. Gegebenenfalls wird jeder Innendorn 16 nach dem Anheben quer zum an der Gliederkette 34 bereitstehenden Greifer 39 verfahren. In diesem Fall kann der Innendorn 16 wie eine Bodenform gehalten werden. Die Boden- und Rumpfform 17 kann zusammen mit der Mündungsform 19 durch einen nicht gezeigten Pneumatikzylinder 21 und einen Kniehebelmechanismus 30 geöffnet und geschlossen werden. Die Verblockung durch den Innendorn 16 erfolgt über den Hydraulikzylinder 20, der über entsprechende Konen und gegebenenfalls Verriegelungsstifte für den erforderlichen Schließdruck und Formschluss sorgt. Die Greifer 39 an der Gliederkette 43 sind so gestaltet, dass sie den Innendorn 16 im Spritzrotor 1 freigeben, und entlang der Konditionierstrecke rotieren. Die Abnahmeund Übergabevorrichtung 38 nimmt den auf das gewünschte Temperaturprofil gebrachten Preform P vom Innendorn 16 durch Abziehen nach unten ab und übergibt den Preform an den Übergabestern 42. Anschließend werden die leeren Innendorne 16 beim Rücktransport in die Spritzgießformen 10 abgekühlt.

Auf dem Spritzrotor 1 ist zentral und beispielsweise oben mittels einer Drehmomentstütze hängend der mitdrehende Extruder 2 angeordnet, entsprechend der Ausführungsform in Fig. 2, mit dem unter dem Extrudermundstück angeordneten Drehverteiler 11, aus dem die einzelnen Nadelventile 14 unterhalb der Spritzgießform 10 versorgt werden. Die Nadelventile 14 gehören dabei zum Maschinenmodul. Die Modulbauweise ist servicefreundlich.

Bei einer nicht im Detail gezeigten alternativen Ausführungsform, die anhand der Fig. 8 und 9 erläutert werden soll, dienen nicht die Innendorne 16 als Träger der Preforms P auf dem Weg zum Blasrotor 6, sondern werden die aus den Spritzgießformen 10 entnehmbaren öffenbaren Mündungsformen 19 hierfür eingesetzt. Jede Mündungsform 19 kann einen Adapterteil aufweisen, der von einem Greifer 39 ergriffen und mit der geschlossenen Mündungsform 19 mit darin platziertem Preform P aus der Spritzgießform 10 herausgeführt wird. Die Mündungsform 19 bleibt geschlossen und wird erst in der Abnahme- und Übergabevorrichtung 38 in der Konditionierstrecke 3a geöffnet, ehe beispielsweise ein Spreizdorn des Übergabesterns 42 den Preform P übernimmt.

Bei einer weiteren Alternative werden die geschlossenen Mündungsformen 19 sogar direkt bis in die Blasformen 50 des Blasrotors 6 überführt, so dass sie auch beim Streckblasprozess als Formteile fungieren. Allerdings ist dann eine nicht gezeigte Rückführvorrichtung für die Mündungsformen 19 erforderlich.

Zum optimalen Auslasten der Streckblasformen 50 im Blasrotor 6 (die Zykluszeit für das Streckblasen kann kürzer sein als die Zykluszeit für das Spritzgießen eines Preforms) ist es zweckmäßig, gegenüber der Anzahl an Blasformen 50 eine größere Anzahl Spritzgießformen 10 vorzusehen, damit der Einstufenprozess unter optimierten Bedingungen abläuft.

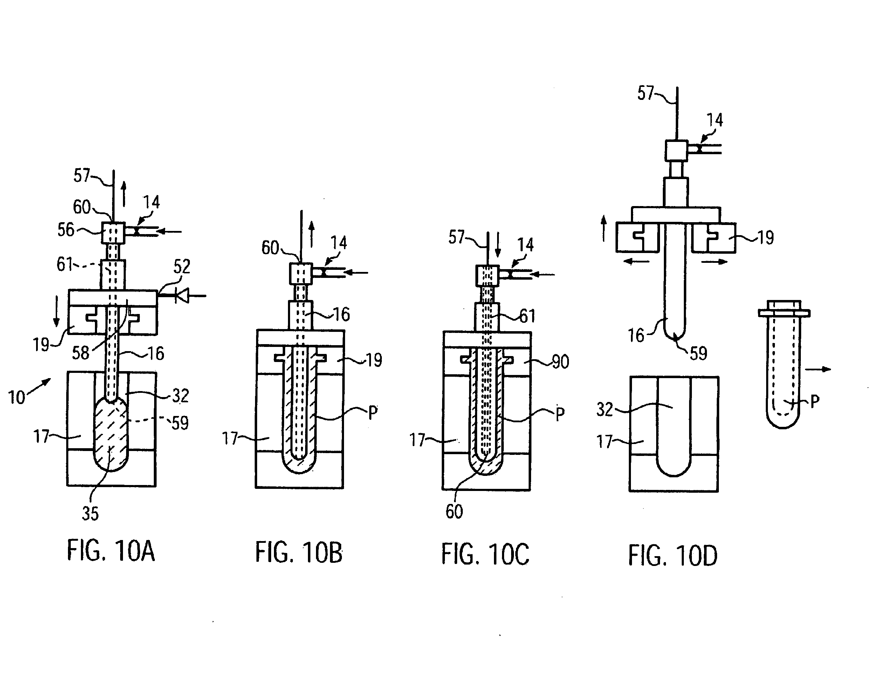

In den Fig. 10A bis 10D werden vier Prozessphasen bei einer weiteren Ausführungsform der Spritzgießform 10 illustriert. Die Spritzgießform 10 weist eine Boden- und Rumpfform 17 (einteilig oder zweiteilig) auf, in der ein Teil der Kavität 32 definiert ist. Die Mündungsform 19 ist zusammen mit dem Innendorn 16 relativ zur Boden- und Rumpfform 17 verfahrbar. Der Innendorn 16 weist bei dieser Ausführungsform einen durchgehenden Innenkanal 61 auf, der am freien Ende des Innendorns 16 an einer Mündung 59 endet. An einen Tragteil 58 der Mündungsform 19 und des Innendorns 16 sind Kühlkanäle 52 angeschlossen, um den innen gekühlten Innendorn 16 und gegebenenfalls auch die Mündungsform 19 kühlen zu können. Auch die Boden- und Rumpfform 17 weist nicht gezeigte Kühlkanäle auf. Am oberen Ende des Innendorns 16 ist eine Düse 56 vorgesehen, an die das Schmelze-Einspritzventil angeschlossen ist, das bei dieser Ausführungsform als Dosier-Nadelventil 14 ausgebildet ist und jeweils eine exakt bemessene Dosis gesteuert einbringt. Im Innenkanal 61 des Innendorns 16 ist eine Nadel 57 verschiebbar geführt, die am freien Ende als Stempel 60 ausgebildet ist, der relativ eng in den Innenkanal 61 eingepasst ist. Zum Dosier-Nadelventil 14 führt ein nicht näher hervorgehobener Heizkanal für die Schmelze.

In der in Fig. 10A gezeigten Prozessphase wird bei abgehobenem Innendorn 16 und geschlossener Mündungsform 19 aus dem Dosier-Nadelventil 14 über den Innenkanal 61 Schmelze in die Kavität 32 unter geringem Druck eingebracht, die einen unteren Teil der Kavität 32 ausfüllt. Die Nadel 57 ist in ihrer oberen Speiseposition, in der sie den Innenkanal 61 nach oben verschließt und die Strömungsverbindung vom Dosier-Nadelventil in den Innenkanal 61 freigibt.

Dann wird zwischen den Prozessphasen in Fig. 10A und Fig. 10B der Stempel 16 zusammen mit der Mündungsform 19 abgesenkt, bis die Mündungsform 19 mit der Boden- und Rumpfform verblockt und der Innendorn 16 in seiner unteren Endstellung fixiert worden sind. Dabei verdrängt der eintauchende Innendorn 16 die Schmelze 35 zunächst bis zum oberen Ende der Kavität 32 in der Boden- und Rumpfform 17. Bis dahin ist noch nicht die gesamte Schmelzedosis eingebracht worden.

In der Prozessphase in Fig. 10B ist die Mündungsform 19 mit der Boden- und Rumpfform 17 verblockt. Die Nadel 57 ist nach wie vor in der Speiseposition. Aus dem Dosier-Nadelventil 14 wird nun der Rest der Schmelzedosis eingebracht, so dass auch der Bereich der Mündungsform 19 ausgefüllt ist.

In der nächsten Prozessphase in Fig. 10C sind das Dosier-Nadelventil 14 zugesteuert und die Nadel 57 in eine untere Nachdrück-Position verschoben worden, wobei die Nadel 57 mit dem Stempel 60 restliches im Innenkanal 61 sozusagen zwischengespeichertes Schmelzevolumen aus dem Innenkanal 61 in die Kavität nachdrückt, bis schließlich der Stempel 60 die Mündung 59 des Innenkanals 61 verschließt.

In der Prozessphase in Fig. 10D ist nach der Fertigstellung des Preforms P der Innendorn 16 zusammen mit der Mündungsform 19 relativ zur Boden- und Rumpfform 17 angehoben worden, wobei der Preform P am Innendorn 16 und in der Mündungsform 19 bleibt und aus der Kavität 32 herausgezogen wird. Danach wird die Mündungsform 19 geöffnet und wird der Preform P abgenommen und in die Konditionierungsstrecke transferiert. Gleichzeitig oder nacheilend wird die Nadel 57 wieder in ihre obere Speiseposition gezogen, um die Verbindung zwischen dem Dosier-Nadelventil 14 und dem Innenkanal 61 freizugeben. Es folgt dann der Prozessschritt entsprechend Fig. 10A.

In einer nicht gezeigten Ausführungsform zu den Fig. 10A bis 10D könnte die Mündungsform 19 auch an der Boden- und Rumpfform 17 verbleiben, während der Innendorn 16 verfahren wird. Zum Abnehmen des Preforms P muss die Mündungsform 19 jedoch zuvor geöffnet werden, damit der Preform mit dem Innendorn 16 aus der Kavität 32 herausgezogen werden kann.

## Patentansprüche

1. Vorrichtung (V) zum Streckblasen von Kunststoffbehältern, insbesondere Flaschen, in einem kontinuierlichen Einstufenprozess, welcher gleichzeitig das Spritzgießen von Preforms (P) in Spritzgießformen (10) zumindest eines drehantreibbaren Spritzrotors (1), das Transferieren der Preforms über eine Konditionierstrecke (3, 3a) zu wenigstens einem drehantreibbaren Blasrotor (6), und das Streckblasen der Behälter aus den Preforms (P) im Blasrotor (6) umfasst, wobei Kavitäten (32) der Spritzgießformen (10) aus einem Extruder-Kopf und durch einen Verteiler (11) aus einem zentralen Extruder mit Schmelze (35) über gesteuerte Einspritzventile speisbar sind, und jede Spritzgießform (10) eine Boden- und Rumpfform (17), eine öffenbare Mundstücksform (19) sowie einen axial durch die Mundstücksform (19) verstellbaren Innendorn (16) aufweist, **dadurch gekennzeichnet, dass** die Achse des Extruders (2) zumindest im Wesentlichen in der Achse (X) des Spritzrotors (1) platziert ist, und dass zumindest der Extruderkopf und der Schmelze-Verteiler (11) permanent und synchron mit dem Spritzrotor (1) drehantreibbar sind.

2. Vorrichtung gemäß Anspruch 1, **dadurch gekennzeichnet, dass** der gesamte Extruder (2) um seine Achse drehantreibbar ist.

3. Vorrichtung nach Anspruch 1, **dadurch gekennzeichnet, dass** der Extruder (2) einen das Extrudermundstück umfassenden, um die Extruderachse drehantreibbaren Druckabschnitt (23) und einen stationären, vorzugsweise über eine Drehmomentstütze (25), relativ zum Spritzrotor (1) stationär festgelegten Beschickungsabschnitt (24) aufweist, und dass zwischen dem Druckabschnitt (23) und dem Beschickungsabschnitt (24) eine abgedichtete Drehverbindung (22) vorgesehen ist, durch die sich eine Extruderschnecke (26) hindurch erstreckt.

4. Vorrichtung nach Anspruch 1, **dadurch gekennzeichnet, dass** der Verteiler (11) eine mit dem Extruderkopf, vorzugsweise entkoppelbar, verbundene Vielkanalscheibe (12) aufweist, die über, vorzugsweise beheizte, Verrohrungen (13) mit an Formträgern der Spritzgießformen (10) montierten, gesteuerten Nadelventilen (14) verbunden ist.

5. Vorrichtung gemäß Anspruch 1, **dadurch gekennzeichnet, dass** an der dem Extruderkopf abgewandten Seite des Verteilers (11) ein Drehverteiler (15) für Arbeitsmedien des Spritzrotors (1) angeordnet ist.

6. Vorrichtung gemäß Anspruch 1, **dadurch gekennzeichnet, dass** die Mundstückform (19) axial verstellbar und, vorzugsweise, gekühlt ist, und dass der axial durch die Mundstückform verstellbare Innendorn (16) innengekühlt ist.

7. Vorrichtung gemäß Anspruch 1, **dadurch gekennzeichnet, dass** das Schmelze-Einspritzventil ein an den Innendorn (16) anschließbares Dosier-Nadelventil (14) ist.

8. Vorrichtung gemäß Anspruch 7, **dadurch gekennzeichnet, dass** der hohle Innendorn (16) einen im Bereich des freien Dornendes mündenden Innenkanal (61) aufweist, der über das Dosier-Nadelventil (14) mit Schmelze (35) speisbar ist, und dass im Innenkanal (61) eine Nadel (57) zwischen einer zurückgezogenen Speiseposition über einen Schmelze-Nachdrückhub bis in eine die Mündung des Innenkanals (61) verschließende Schließposition verfahrbar ist.

9. Vorrichtung gemäß Anspruch 8, **dadurch gekennzeichnet, dass** die Nadel (57) am freien Ende einen Nachdrück-Stempel (60) mit zumindest in etwa dem Durchmesser der Mündung (59) des Innenkanals (61) entsprechendem Durchmesser aufweist.

10. Vorrichtung gemäß Anspruch 6 oder 7, **dadurch gekennzeichnet, dass** den Spritzgießformen (10) entlang der Konditionierstrecke (3, 3a) transportierbare Transfer-Spreizdorne (40) zugeordnet sind, die zur Entnahme der Preforms (P) jeweils aus den Mundstücksformen (19) gesteuert betätigbar sind.

11. Vorrichtung gemäß Anspruch 10, **dadurch gekennzeichnet, dass** zwischen dem Blasrotor (6) und der Konditionierstrecke (3) ein Einlaufstern (5) mit Übergabeetementen (41) für von den Transfer-Spreizdornen (40) abgenommene Preforms (P) vorgesehen ist.

12. Vorrichtung gemäß Anspruch 1, **dadurch gekennzeichnet, dass** jede Spritzgießform (10) jeweils öffenbare Boden- und Rumpfformen (17) und eine, vorzugsweise gekühlte, Mundstücksform (19) sowie einen durch die Mundstücksform (19) verfahrbaren und aus der Spritzgießform (10) entnehmbaren Innendorn (16) aufweist, der als Preform-Transferelement zumindest entlang der Konditionierstrecke (3a) transportierbar ist.

13. Vorrichtung gemäß Anspruch 12, **dadurch gekennzeichnet, dass** der entnehmbare Innendorn (16) mit einem Adapterteil (44) für an einer auch um den Spritzrotor (1) geführten Gliederkette (43) der Konditionierstrecke (3a) angeordnete Transfergreifer (39) versehen ist.

14. Vorrichtung gemäß Anspruch 12, **dadurch gekennzeichnet, dass** in der Konditionierstrecke (3a) eine Preform-Abnahme- und -Übergabevorrichtung (38) enthalten ist, mit der die Preforms (P) von den Innendornen (16) abnehmbar und an einen mit einem Einlaufstern (5) des Blasrotors (6) zusammenwirkenden Übergabestern (42) transferierbar sind.

15. Vorrichtung gemäß Anspruch 1, **dadurch gekennzeichnet, dass** jede Spritzgießform (10) eine öffenbare und entnehmbare Mundstücksform (19) und einen durch die Mundstücksform verfahrbaren, vorzugsweise innen gekühlten, Innendorn (16) aufweist, und dass die Mundstücksformen (19) mit den Preforms (P) mittels Transferelementen (40) in der Konditionierstrecke (3a) zumindest entlang der Konditionierstrecke (3a), vorzugsweise sogar bis in Blasformen (50) des Blasrotors (6), transportierbar sind.

16. Vorrichtung nach wenigstens einem der vorhergehenden Ansprüche, **dadurch gekennzeichnet, dass** die Mundstücksform (19) über einen Pneumatikzylinder (21) und einen Kniehebelmechanismus (30) betätigbar und über je einen Schließkonus (31) mit der Rumpfform (17) bzw. dem Innendorn (16) axial verblockbar ist.

17. Vorrichtung nach wenigstens einem der vorhergehenden Ansprüche, **dadurch gekennzeichnet, dass** der Innendorn (16) über einen Hydraulikzylinder und/oder eine servo-getriebene Gewindespindel (20) axial verstellbar und in der Schließposition mit der Mundstücksform (19) bzw. der die Mundstücksform (19) enthaltenden Bodenund Rumpfform (17) verblockbar ist.

18. Vorrichtung gemäß Anspruch 1, **dadurch gekennzeichnet, dass** die Konditionierstrecke (3, 3a) entweder als rotorförmiger Konditionierkreis mit umfangsseitiger Gliederkette und Transfer-Spreizdornen (40) oder als langgestreckte Konditionierschleife mit einer umfangsseitigen Gliederkette (43) und Innendorn-Transfergreifern (46) ausgebildet ist.

19. Vorrichtung gemäß Anspruch 1, **dadurch gekennzeichnet, dass** die Konditionierstrecke, insbesondere die als Konditionierkreis ausgebildete Konditionierstrecke (3), eine Teilungsverzugsstrecke im Transferweg vom Spritzrotor (1) zum Blasrotor (6) definiert.

20. Vorrichtung nach einem der vorangegangenen Ansprüche, **dadurch gekennzeichnet, dass** dem Extruder eine Schmelzepumpe zugeordnet ist.

21. Verfahren zum Streckblasen von Kunststoffbehältern, insbesondere Flaschen, in einem kontinuierlichen Einstufenprozess, welcher gleichzeitig das Spritzgießen von Preforms (P) aus einer Kunststoff-Schmelze (35) in Spritzgießformen (10) zumindest eines drehantreibbaren Spritzrotors (1), das Transferieren der Preforms über eine Konditionierstrecke (3, 3a) zu wenigstens einem drehantreibbaren Blasrotor (6), und das Streckblasen der Behälter aus den Preforms (P) im Blasrotor (6) umfasst, wobei Kavitäten (32) der Spritzgießformen (10) aus einem Extruder-Kopf und durch einen Verteiler (11) aus einem zentralen Extruder mit Schmelze (35) über gesteuerte Einspritzventile speisbar sind, und jede Spritzgießform (10) eine Boden- und Rumpfform (17), eine öffenbare Mundstücksform (19), und einen zeitlich und wegabhängig gesteuert axial durch die Mundstücksform (19) in die Kavität (32) verstellbaren Innendorn (16) aufweist und das Einspritzventil zeitlich und wegabhängig gesteuert ist, **dadurch gekennzeichnet, dass** die Zeiten und Wege beim Steuern des als Nadelventil (14) ausgebildeten Einspritzventils und der axialen Bewegung zumindest des Innendorns (16) jeder Kavität (32) so aufeinander abgestimmt werden, dass dem Spritzgießen des Preforms in der Kavität (32) vor, bei oder nach dem endgültigen Schließen der Spritzgießform (10) eine Kompressions-Molding- oder Nachdrück-Phase überlagert wird, wobei zumindest der Extruder-Kopf des mit seiner Achse zumindest im Wesentlichen in der Achse des Spritzrotors (1) platzierten Extruders (2) und der Schmelze-Verteiler (11) permanent und synchron mit dem Spritzrotor (1) drehangetrieben werden.

22. Verfahren gemäß Anspruch 21, **gekennzeichnet durch** folgende Schritte:
ein Teil der Kavität (32) wird in Abwesenheit des Innendorns (16) unter geringem Druck mit Schmelze (35) gefüllt,
die Schmelzefüllung wird unter geringem Druck **durch** Verstellen des Innendorns (16) in Richtung zu seiner Endstellung in Richtung zur Mündungsform (19) verdrängt,
der Innendorn (16) wird in der Endstellung fixiert, und
restliches Schmelzevolumen wird unter erhöhtem Druck in die Kavität (32) eingespritzt.

23. Verfahren gemäß Anspruch 21, **gekennzeichnet durch** folgende Schritte:
bei noch nicht in die Endposition verstelltem Innendorn (16) wird das Nadelventil (14) geöffnet und wird Schmelze (35) dosiert unter geringem Druck in die Boden- und die Rumpfform (17) bis unterhalb der Höhe der Mündungsform (19) eingebracht,
der Innendorn (16) wird unter Verdrängen von Schmelze (35) in Richtung zur Mundstücksform (19) bis in die Endlage verstellt und mit der erforderlichen Schließkraft mit der Mundstücksform (19) verblockt, und
restliches Schmelzevolumen wird dosiert unter hohem Druck über das Nadelventil (14) eingespritzt.

24. Verfahren gemäß Anspruch 21, **gekennzeichnet durch** folgende Schritte:
ein Teil der Kavität (32) wird in Abwesenheit des Innendorns (16) unter geringem Druck **durch** einen Innenkanal (61) des Innendorns (16) mit Schmelze (35) gefüllt,
die Schmelzefüllung wird unter geringem Druck **durch** Verstellen des Innendorns (16) und der Mündungsform (19) in Richtung zu einer Endstellung in Richtung zur Mündungsform (19) verdrängt,
der Innendorn (16) und die Mündungsform (19) werden in der Endstellung fixiert,
ein restliches Schmelzevolumen wird unter erhöhtem Druck aus dem Dosier-Nadelventil (14) **durch** den Innenkanal (61) des Innendorns (16) in die Kavität (32) eingespritzt, und
in der Nachdrück-Phase wird im Innenkanal (61) des Innendorns (16) gespeicherte Schmelze aus dem Innendorn (16) in die Kavität (32) nachgedrückt.

25. Verfahren gemäß wenigstens einem der Ansprüche 21 bis 24, **dadurch gekennzeichnet, dass** die Mundstückform (19) erst geschlossen oder auf die Rumpfform (17) aufgesetzt und/oder der Innendorn (16) erst in der Endstellung fixiert wird bzw. werden nachdem in den einen Teil der Kavität (32) ein vorbestimmtes Volumen der Schmelze (35) unter niedrigem Druck eingebracht worden ist.

## Claims

1. Device (V) for stretch blow molding plastic containers, in particular bottles, in a continuous single stage process comprising at the same time injection molding of preforms (P) in injection molding dies (10) of at least one rotatably driven injection rotor (1), transferring the pre-forms through a conditioning section (3, 3a) to at least one rotatably driven blowing rotor (6), and stretch blowing the containers from the pre-forms (P) in the blowing rotor (6), wherein cavities (32) of the injection molding dies (10) are supplied from a central extruder out of an extruder head and through a melt distributor (11) with a melt via controlled injection valves, and wherein each injection molding die (10) comprises a bottom mold and a body mold (17), an openable tip mold (19) as well as an inner mandrel (16) which is adjustable axially through the tip mold (19), **characterised in that** the axis of the extruder (2) is placed at least substantially in the axis (X) of the injection rotor (1), and that at least the extruder head and the melt distributor (11) are permanently rotatably driven in synchronism with the injection rotor (1).

2. Device according to claim 1, **characterised in that** the entire extruder (2) is rotatably driven about its axis.

3. Device according to claim 1, **characterised in that** the extruder (2) has a presser section (23) including an extruder mouth piece and being rotatably driven about the extruder axis, and a stationary in-feed section (24), which in-feed section (24), preferably, is stationary fixed in relation to the injection rotor (1) via a torque support (25), and that a sealed rotary connection (22) is arranged between the pressure section (23) and the in-feed section (24) through which rotor connection an extruder screw (26) extends.

4. Device according to claim 1, **characterised in that** the melt distributor (11) comprises a multi-channel disc (12) connected with the extruder head, preferably connected to be decoupled, and that the multi-channel disk (12) is connected via pipings (13), preferably heated pipings, with controlled needle valves (14) mounted to mold carriers of the injection molding dies (10).

5. Device according to claim 1, **characterised in that** a rotary distributor (15) for working medias of the injection rotor (1) is arranged at the side of the melt distributor (11) remote from the extruder head.

6. Device according to claim 1, **characterised in that** the tip mold (18) is axially adjustable and, preferably, cooled, and that the inner mandrel (16) which is axially adjustable through the tip mold (19) has an interior cooling.

7. Device according to claim 1, **characterised in that** the melt injection valve is a dosing needle valve (14) to be connected to the interior mandrel (16).

8. Device according to claim 7, **characterised in that** the hollow interior mandrel (16) comprises an interior channel (61) having its mouth in the region of the free mandrel end, which interior channel (61) is to be supplied with the melt (35) via the dosing needle valve (14), and that a needle (57) can be shifted in the interior channel (61) between a retracted supply position through a melt after pressing stroke into an extended closing position at the mouth of the interior channel (61).

9. Device according to claim 8, **characterised in that** the needle (57) comprises an post pressing plunger (60) having a diameter substantially corresponding with at least the diameter of the mouth (59) of the interior channel (61).

10. Device according to claim 6 or 7, **characterised in that** transfer expander mandrels (40) which can be transported along the conditioning section (3, 3a) are associated to the injection molding dies (10), which transfer expander mandrels (40) are actuable in controlled fashion for removing the pre-forms (P) respectively from the tip molds (19).

11. Device according to claim 10, **characterised in that** an entrance star (5) having transfer elements (41) for pre-forms (P) removed from the transfer expander mandrels (40) is arranged between the blowing rotor (6) and the conditioning section (3).

12. Device according to claim 1, **characterised in that** each injection mold die has bottom and body molds (17) which respectively can be opened and a, preferably cooled, tip mold (19) as well as an interior mandrel (16) which can be adjusted through the tip mold (19) and can be removed from the injection mold die (10), which interior mandrel (16) can be transported at least along the conditioning section (3a) as a pre-form transfer element.

13. Device according to claim 12, **characterised in that** the removable interior mandrel (16) is equipped with an adapter piece (44) for transfer grippers (39) arranged at a link chain (43) of the conditioning section (3a) which link chain (43) as well extends around the injection rotor (1).

14. Device according to claim 12, **characterised in that** the conditioning section (3a) contains a pre-form removing and transferring device (38) by which device (38) the preforms (P) can be removed from the interior mandrels (16) and can be transferred to a transfer star (42) co-operating with an entry star (5) of the blowing rotor (6).

15. Device according to claim 1, **characterised in that** each injection molding die (10) has a tip mold (19) which can be opened and can be removed and an interior mandrel (16, which preferably has an interior cooling, and can be displaced through the tip mold (19), and that the tip molds (19) can be transported together with their pre-forms (P) by transfer elements (40) in the conditioning section (3a) at least along the conditioning section (3a), preferably, even into the blow molds (50) of the blowing rotor (6).

16. Device according to at least one of the preceding claims, **characterised in that** the tip mold (19) can be actuated via a pneumatic cylinder (21) and a toggle lever mechanism and can be axially blocked with the body mold (17) or the interior mandrel (16) via a respective closure cone (31).

17. Device according to at least one of the preceding claims, **characterised in that** the interior mandrel (16) is axially adjustable and can be blocked in the closure position with the tip mold (19) or the bottom and body mold (17) containing the tip mold (19) by a hydraulic cylinder and/or a servo-driven threaded spindle (20).

18. Device according to claim 1, **characterised in that** the conditioning section (3, 3a) is formed either as a rotor-shaped conditioning circle having a link chain and the transfer expander mandrels (40) at the periphery, or as a longitudinally extending conditioning loop with a link chain (43) at the periphery and interior mandrel transfer grippers (46).

19. Device according to claim 1, **characterised in that** the conditioning section, in particular the conditioning section (3) formed as a conditioning circle, defines an indexing shifting section in a transfer path from the injection rotor (1) to the blowing rotor (6).

20. Device according to at least one of the preceding claims, **characterised in that** a melt pump is associated to the extruder.

21. Method for stretch blow molding plastic containers, in particular bottles, in a continuous single stage process, comprising at the same time injection molding of pre-forms (P) from a plastic melt (35) in injection molding dies (10) of at least one rotatably driven injection rotor (1), transferring the pre-forms through a conditioning section (3, 3a) to at least one rotatably driven blowing rotor (6), and stretch blowing the containers from the pre-forms (P) in the blowing rotor (6), wherein cavities (32) of the injection molding dies (10) can be supplied via controlled injection valves from a central extruder with the plastic melt (35) out of an extruder head and through a melt distributor (11), and wherein each injection molding die (10) comprises a bottom and body mold (17), an openable tip mold (19), and an interior mandrel (16) being adjustable through the tip mold (19) axially into the cavity (32) in timewise and stroke depending controlled fashion, and wherein the injection valve is controlled in time and stroke depending fashion, **characterised in that** the time durations and the strokes for controlling the injection valve formed as a needle valve (14) and the axial movement of at least the interior mandrel (16) of each cavity (32) are matched with each other so that a compression molding phase or a post pressure phase is superimposed to the injection molding process of the pre-forms in the cavity (32) prior to, during or after the final closing of the injection molding die (10), wherein at least the extruder head of the extruder (2) placed with its axis at least substantially in the axis of the injection rotor (1) and also the melt distributor (11) are rotatably driven permanently and in synchronism with the injection rotor (1).

22. Method according to claim 21, **characterised by** the following steps:
a part of the cavity (32) is filled with melt (35) under low pressure in absence of the interior mandrel (16),
the melt charge is displaced in the direction to the tip mold (19) under low pressure by adjusting the interior mandrel (16) in the direction to its end position,
the interior mandrel (16) is fixed in its end position, and
a residual melt volume is injected under elevated pressure into the cavity (32).

23. Method according to claim 21, **characterised by** the following steps:
the needle valve (14) is open while the interior mandrel (16) is not yet adjusted into the end position, and melt (35) is introduced in dosed fashion under low pressure into the bottom and the body mold (17) up to underneath the height position of the tip mold (19),
the interior mandrel (16) is adjusted into the end position by displacing the introduced melt (35) in a direction towards the tip mold (19) and is then blocked with the introduced tip mold (19) with a necessary closing force, and
a residual melt volume is injected in dosed fashion under high pressure through the needle valve (14).

24. Method according to claim 21, **characterised by** the following steps:
a part of the cavity (32) is filled with melt (35) through an interior channel (62) of the interior mandrel (16) while the interior mandrel (16) is absent from the cavity (32),
the filled-in melt charge is displaced under low pressure in a direction towards the tip mold (19) by adjusting the interior mandrel (16) and the tip mold (19) in a direction towards an end position,
the interior mandrel (16) and the tip mold (19) are fixed in the end position,
a residual melt volume is injected under elevated pressure by the dosing needle valve (14) through the interior channel (16) of the interior mandrel (16) into the cavity (32), and
during the post pressure phase also melt intermediately stored in the interior channel (61) of the interior mandrel (16) is displaced from the interior mandrel (16) into the cavity (32).

25. Method according to at least one of the claims 21 to 24, **characterised in that** the tip mold (19) is first closed or put on the body mold (17) and/or the interior mandrel (16) first is fixed in the end position after a predetermined volume of the melt (35) is introduced in the one part of the cavity (32) under low pressure.

## Revendications

1. Dispositif (V) pour le soufflage-étirage de récipients en matière plastique, en particulier de bouteilles, lors d'un processus continu en une étape qui comprend simultanément le moulage par injection de préformes (P) dans des moules à injection (10) d'au moins un rotor d'injection (1) apte à être entraîné en rotation, le transfert des préformes, sur une trajectoire de conditionnement (3, 3a), jusqu'à au moins un rotor de soufflage (6) apte à être entraîné en rotation, étant précisé que des cavités (32) des moules à injection (10) sont aptes à être alimentées en matière fondue (35) à partir d'une tête d'extrudeuse et, par un répartiteur (11), à partir d'une extrudeuse centrale par l'intermédiaire d'injecteurs, et que chaque moule à injection (10) comporte un moule pour fond ou corps (17), un moule de filière (19) apte à être ouvert, et un mandrin intérieur (16) mobile axialement à travers le moule de filière (19), **caractérisé en ce que** l'axe de l'extrudeuse (2) est placé au moins globalement dans l'axe (X) du rotor d'injection (1), et **en ce que** la tête d'extrudeuse et le répartiteur de matière fondue (11), au moins, sont aptes à être entraînés en rotation de manière permanente et synchrone par rapport au rotor d'injection (1).

2. Dispositif selon la revendication 1, **caractérisé en ce que** toute l'extrudeuse (2) est apte à être entraînée en rotation sur son axe.

3. Dispositif selon la revendication 1, **caractérisé en ce que** l'extrudeuse (2) comporte une partie de pression (23) qui comprend la filière d'extrudeuse et qui est apte à être entraînée en rotation sur l'axe d'extrudeuse, et une partie d'alimentation (24) stationnaire qui est bloquée de manière stationnaire par rapport au rotor d'injection (1), de préférence par l'intermédiaire d'un bras de suspension (25), et **en ce qu'**il est prévu entre la partie de pression (23) et la partie d'alimentation (24) une liaison rotative étanche (22) à travers laquelle s'étend une vis d'extrudeuse (26).

4. Dispositif selon la revendication 1, **caractérisé en ce que** le répartiteur (11) comporte une plaque à quatre canaux (12) qui est reliée, de préférence de manière à pouvoir être désaccouplée, à la tête d'extrudeuse et qui est reliée par des tuyaux (13), de préférence chauffés, à des soupapes à pointeau (14) commandées qui sont montées sur des supports des moules à injection (10).

5. Dispositif selon la revendication 1, **caractérisé en ce qu'**il est prévu sur le côté du répartiteur (11) opposé à la tête d'extrudeuse un répartiteur rotatif (15) pour fluide moteur du rotor d'injection (1).

6. Dispositif selon la revendication 1, **caractérisé en ce que** le moule de filière (19) est mobile axialement et est de préférence refroidi, et **en ce que** le mandrin intérieur (16) mobile axialement à travers le moule de filière est refroidi intérieurement.

7. Dispositif selon la revendication 1, **caractérisé en ce que** la soupape d'injection de matière fondue est constituée par une soupape à pointeau de dosage (14) apte à être raccordée au mandrin intérieur (16).

8. Dispositif selon la revendication 7, **caractérisé en ce que** le mandrin intérieur creux (16) comporte un canal intérieur (61) qui débouche dans la zone de l'extrémité libre du mandrin et qui est apte à être alimenté en matière fondue (35) par l'intermédiaire de la soupape à pointeau de dosage (14), et **en ce que** dans le canal intérieur (61), un pointeau (57) est mobile, sur une course de compression supplémentaire de matière fondue, entre une position d'alimentation rétractée et une position de fermeture qui obture l'ouverture du canal intérieur (61).

9. Dispositif selon la revendication 8, **caractérisé en ce que** le pointeau (57) présente à son extrémité libre un poinçon de compression supplémentaire (60) avec un diamètre correspondant au moins approximativement au diamètre de l'ouverture (59) du canal intérieur (61).

10. Dispositif selon la revendication 6 ou 7, **caractérisé en ce qu'**il est prévu, associés aux moules d'injection (10), des mandrins de transfert extensibles (40) qui sont aptes à être transportés le long de la trajectoire de conditionnement (3, 3a) et qui sont aptes à être actionnés de manière commandée en vue d'extraire les préformes (P) des moules de filière (19).

11. Dispositif selon la revendication 10, **caractérisé en ce qu'**il est prévu entre le rotor de soufflage (6) et la trajectoire de conditionnement (3) un dispositif d'entrée en étoile (5) avec des éléments de transfert (41) pour des préformes (P) extraites des mandrins de transfert extensibles (40).

12. Dispositif selon la revendication 1, **caractérisé en ce que** chaque moule d'injection (10) comporte des moules pour fond ou corps (17) aptes à être ouverts, et un moule de filière (19) de préférence refroidi, ainsi qu'un mandrin intérieur (16) qui est mobile à travers le moule de filière (19), qui est apte à être extrait du moule d'injection (10) et qui est apte à être transporté comme élément de transfert de préforme au moins le long de la trajectoire de conditionnement (3a).

13. Dispositif selon la revendication 12, **caractérisé en ce que** le mandrin (16) apte à être extrait est pourvu d'un adaptateur (44) pour des crampons de transfert (39) disposés sur une chaîne (43) de la trajectoire de conditionnement (3a) qui passe sur le rotor d'injection (1).

14. Dispositif selon la revendication 12, **caractérisé en ce que** la trajectoire de conditionnement (3a) contient un dispositif d'enlèvement et de transfert de préformes (38) à l'aide duquel les préformes (P) peuvent être enlevées des mandrins intérieurs (16) et transférées sur un dispositif de transfert en étoile (42) qui coopère avec un dispositif d'entrée en étoile (5) du rotor de soufflage (6).

15. Dispositif selon la revendication 1, **caractérisé en ce que** chaque moule d'injection (10) comporte un moule de filière (19) apte à être ouvert et apte à être enlevé, et un mandrin intérieur (16), de préférence refroidi intérieurement, qui est mobile à travers le mandrin de filière, et **en ce que** les moules de filière (19) sont aptes à être transportés avec les préformes (P) à l'aide d'éléments de transfert (40) sur la trajectoire de conditionnement (3a) au moins le long de celle-ci.

16. Dispositif selon l'une au moins des revendications précédentes, **caractérisé en ce que** le moule de filière (19) est apte à être actionné par l'intermédiaire d'un vérin pneumatique (21) et d'un mécanisme à genouillère (30) et est apte à être bloqué axialement avec le moule de corps (17) ou avec le mandrin intérieur (16) par l'intermédiaire d'un cône de fermeture (31).

17. Dispositif selon l'une au moins des revendications précédentes, **caractérisé en ce que** le mandrin intérieur (16) est mobile axialement par l'intermédiaire d'un vérin hydraulique et/ou d'une tige filetée (20) à servocommande, et est apte à être bloqué dans la position de fermeture avec le moule de filière (19) ou le moule de fond ou de corps (17) contenant le moule de filière (19).

18. Dispositif selon la revendication 1, **caractérisé en ce que** la trajectoire de conditionnement (3, 3a) est conçue soit comme un circuit de conditionnement en forme de rotor avec une chaîne et des mandrins extensibles de transfert (40), côté périphérie, soit comme une boucle de conditionnement de forme allongée avec une chaîne (43) et des crampons de transfert de mandrin intérieur (46) côté périphérie.

19. Dispositif selon la revendication 1, **caractérisé en ce que** la trajectoire de conditionnement, en particulier la trajectoire de conditionnement (3) conçue comme un circuit de conditionnement, définit une trajectoire d'étirement de division sur la voie de transfert qui va du rotor d'injection (1) au rotor de soufflage (6).

20. Dispositif selon la revendication 1, **caractérisé en ce qu'**une pompe pour matière fondue est associée à l'extrudeuse.

21. Procédé pour le soufflage-étirage de récipients en matière plastique, en particulier de bouteilles, lors d'un processus continu en une étape qui comprend simultanément le moulage par injection de préformes (P) dans des moules à injection (10) d'au moins un rotor d'injection (1) apte à être entraîné en rotation, le transfert des préformes, sur une trajectoire de conditionnement (3, 3a), jusqu'à au moins un rotor de soufflage (6) apte à être entraîné en rotation, étant précisé que des cavités (32) des moules à injection (10) sont aptes à être alimentées en matière fondue (35) à partir d'une tête d'extrudeuse et, par un répartiteur (11), à partir d'une extrudeuse centrale par l'intermédiaire d'injecteurs, et que chaque moule à injection (10) comporte un moule pour fond ou corps (17), un moule de filière (19) apte à être ouvert, et un mandrin intérieur (16) mobile axialement jusque dans la cavité (32) en étant commandé dans le temps et en fonction de la course, **caractérisé en ce que** les temps et les courses, lors de la commande de la soupape d'injection conçue comme une soupape à pointeau (14) et du déplacement axial du mandrin intérieur (16), au moins, de chaque cavité (32), sont ajustés de telle sorte qu'on superpose au moulage par injection des préformes dans la cavité (32), avant, pendant ou après la fermeture définitive du moulage à injection (10), une phase de moulage par compression ou de compression supplémentaire, étant précisé que la tête d'extrudeuse, au moins, de l'extrudeuse (2) placée avec son axe au moins globalement dans l'axe du rotor d'injection (1), et le répartiteur de matière fondue (11) sont entraînés en rotation de manière permanente et synchrone par rapport au rotor d'injection (1).

22. Procédé selon la revendication 21, **caractérisé par** les étapes suivantes :
une partie de la cavité (32), en l'absence du mandrin intérieur (16), est remplie de matière fondue (35) sous une pression faible,
la matière fondue versée est refoulée en direction du moule de filière (19), sous une pression faible, grâce au déplacement du mandrin intérieur (16) en direction de sa position de fin de course,
le mandrin intérieur (16) est fixé dans sa position de fin de course, et
le reste du volume de matière fondue est injecté dans la cavité (32) sous une pression plus élevée.

23. Procédé selon la revendication 21, **caractérisé par** les étapes suivantes :
alors que le mandrin intérieur (16) n'est pas encore arrivé dans sa position de fin de course, la soupape à pointeau (14) s'ouvre et la matière fondue (35) est introduite de manière dosée, sous une pression faible, dans le moule de fond et de corps (17) jusqu'au dessous de la hauteur du moule de filière (19),
le mandrin intérieur (16) est amené dans sa position de fin de course en refoulant la matière fondue (35) en direction du moule de filière (19), et est bloqué avec celui-ci avec la force de fermeture requise, et
le reste du volume de matière fondue est injecté de manière dosée, sous une pression plus élevée, par l'intermédiaire de la soupape à pointeau (14).

24. Procédé selon la revendication 21, **caractérisé par** les étapes suivantes :
une partie de la cavité (32), en l'absence du mandrin intérieur (16), est remplie de matière fondue (35) sous une pression faible, par un canal intérieur (61) du mandrin intérieur (16),
la matière fondue versée est refoulée en direction du moule de filière (19), sous une pression faible, grâce au déplacement du mandrin intérieur (16) et du moule de filière (19) en direction d'une position de fin de course,
le mandrin intérieur (16) et le moule de filière (19) sont fixés dans la position de fin de course,
un volume de matière fondue restant est injecté dans la cavité (32) sous une pression plus élevée, à partir de la soupape à pointeau de dosage (14), par le canal intérieur (61) du mandrin intérieur (16), et
lors de la phase de compression supplémentaire, la matière fondue stockée dans le canal intérieur (61) du mandrin intérieur (16) est ajoutée par compression dans la cavité (32) à partir dudit mandrin intérieur (16).

25. Procédé selon l'une au moins des revendications 21 à 24, **caractérisé en ce que** le moule de filière (19) n'est fermé ou n'est posé sur le moule de corps (17) et/ou le mandrin intérieur (16) n'est fixé dans sa position de fin de course qu'après qu'un volume prédéfini de matière fondue (35) a été introduit dans une partie de la cavité (32) sous une pression faible.
